Europäisches Patentamt

European Patent Office

Office européen des brevets

(11) Publication number: **0 071 334**
**A1**

## (12) EUROPEAN PATENT APPLICATION

(21) Application number: **82302968.1**

(22) Date of filing: **09.06.82**

(51) Int. Cl.³: **G 01 B 21/00**
**G 01 C 22/00**

(30) Priority: **12.06.81 GB 8118073**

(43) Date of publication of application:
**09.02.83 Bulletin 83/6**

(84) Designated Contracting States:
**DE FR NL**

(71) Applicant: **The General Electric Company, p.l.c.**
**1 Stanhope Gate**
**London W1A 1EH(GB)**

(72) Inventor: **Rivers-Latham, Paul William**
**42 High Street**
**Syresham Northamptonshire(GB)**

(74) Representative: **Pope, Michael Bertram Wingate**
**Central Patent Department The General Electric**
**Company, p.l.c. Hirst Research Centre East Lane**
**Wembley Middlesex HA9 7PP(GB)**

(54) Device for measuring the length of a path.

(57) A device which, when used to trace out a path on a surface provides a measure of the length of the path (e.g. for measuring the distance between two points on a map) comprises means (1) for dispensing a marking agent as the device traces out the path, and means (M, 2) for monitoring the dispensed marking agent. In a preferred form of the device the marking agent is deposited on a surface (S) as it is dispensed, and a property of the marking agent (e.g. when the agent is electric charge, its polarity) is changed each time the device has travelled a predetermined distance, the monitoring means counting the number of changes.

Fig.1.

EP 0 071 334 A1

Croydon Printing Company Ltd.

COMPLETE DOCUMENT

This invention relates to measuring devices.

More particularly, the invention relates to devices which, when used to trace out a path, provide a measure of the length of the path. One particular use of such a device is for measuring the length of a path between two points on a map, or plan or the like.

Conventionally such devices comprise a wheel which is placed in contact with the surface on which the path lies and is thereby caused to rotate as the device traces out the path, the wheel being coupled by gearing to a pointer which moves across a scale by an amount corresponding to the length of the path.

Such comventional devices suffer from the disadvantage that the axis of rotation of the wheel needs to be maintained at right angles to the direction of travel of the device in operation so that measurement of tortuous paths is quite difficult.

It is an object of the present invention to provide a device for measuring the length of a path wherein this difficulty is overcome.

According to the present invention there is provided a device for measuring the length of a path comprising: means for dispensing a marking agent as the device traces out said path, and means for monitoring the dispensed marking agent.

The marking agent may, for example, be a liquid, electric charge, or magnetic field.

In one particular device in accordance with the invention the quantity of marking agent dispensed bears a predetermined relation to the distance travelled by the device, and said monitoring means monitors the quantity of marking agent dispensed.

In another particular device in accordance with the invention the marking agent is deposited on a surface as it is dispensed and the monitoring means monitors the deposited marking agent. In such a device the marking agent is preferably deposited at a first location in the device and the deposited marking agent is monitored at a second location coaxially surrounding the first location.

In one such device, as the marking agent is deposited a property of the deposited marking agent is changed with the distance travelled by the device in predetermined manner, and the monitoring means monitors the change in said property of the deposited marking agent. In a preferred form of such a device, said property of the deposited marking agent changes each time the device has travelled a predetermined distance, and the monitoring means counts the number of said changes.

In a further preferred form of such a device the marking agent is deposited at a first location in the device and said property of the deposited marking agent is detected at a second location in the device at said predetermined distance from the first location, and the property of the marking agent deposited at said first location is changed in response to the detection of a change in the property of the deposited marking agent at said second location.

The surface on which the marking agent is deposited may be the actual surface on which the path to be measured lies. However, where the surface on which the path lies is not a suitable surface for deposition of the marking agent, or where the marking agent is a liquid and it is desired not to deface that surface, a sheet of transparent material with suitable properties may be laid over the surface on which the path to be measured lies.

Alternatively, the device may include a sphere having a surface with suitable properties on which the measuring agent is deposited as the device traces the path to be measured, the sphere being mounted for rotation about its centre by contact with the surface on which the path lies as the device traces out the path.

One device in accordance with the invention, and several modifications thereof, will now be described, by way

0071334

-of example only, with reference to the accompanying drawings in which:-

Figure 1 is a diagram illustrating the basic form of the device;

Figure 2 illustrates a preferred form of one feature of the device of Figure 1; and

Figure 3 illustrates a modification of the device of Figure 1.

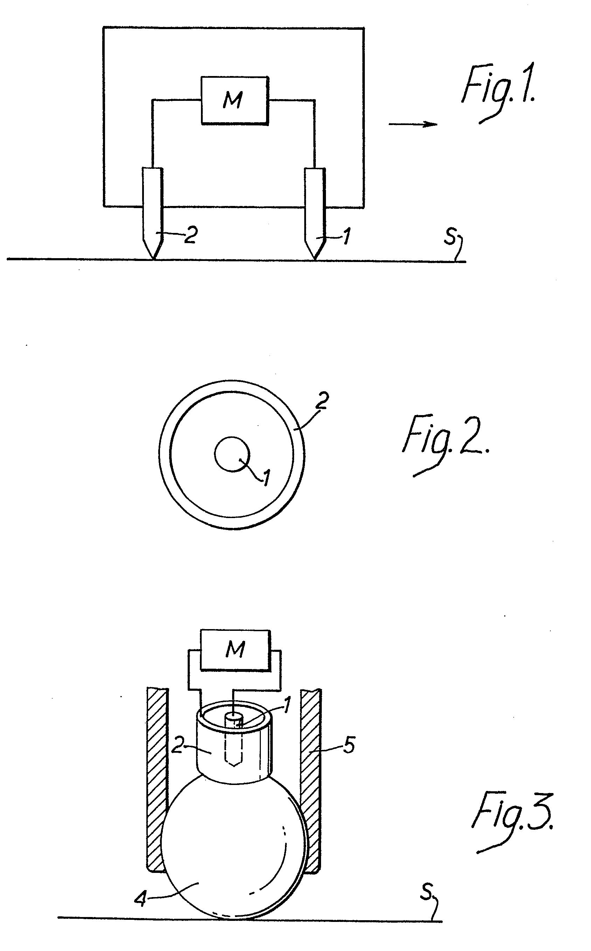

Referring to Figure 1, the device comprises a marker 1 which deposits a marking agent on a surface S as the device is moved across the surface. If the relation between the dispensation of marking agent and the distance travelled by the device is known, then the distance travelled by the device can be measured by monitoring the dispensed marking agent.

In one form of the device the marking agent is dispensed from the marker 1 at a rate related to the distance travelled. The distance travelled can then be measured by a measuring device M which measures the quantity of marking agent dispensed. In such an arrangement the marking agent is suitably a liquid or electric charge. The measuring device may be arranged to monitor the quantity of marking agent dispensed by the marker 1 directly or by monitoring the amount of marking agent in a reservoir (not shown) from which marking agent is supplied to the marker 1.

Alternatively and preferably, the measuring device M is associated with a probe 2, as illustrated in Figure 1, which senses the marking agent actually deposited on the surface S.

In order to ensure that the probe 2 will accurately follow the path traced by the marker 1 for movement of the marker 1 in any direction over the surface S the probe 2 is suitably of annular form and coaxially surrounds the marker 1, as illustrated in Figure 2, the spacing between the marker 1 and probe 2 being as small as is practicable.

In a preferred form of the device the marker 1 deposits an electric charge whose polarity reverses each time the device has moved a predetermined distance. The distance travelled by the device can then be determined by the measuring means M from the number of changes in charge polarity detected by the probe 2. In such an arrangement the marker 1 may be arranged to deposit initially a charge of one polarity. When the device has been moved a distance equal to the spac between the marker 1 and the probe 2, the probe 2 detects t charge deposited by the marker, and instructs the marker 1 . to reverse the polarity of the deposited charge. When the device has been moved a further amount equal to the spacing between the marker 1 and the probe 2, the probe 2 detects t charge of reverse polarity and instructs the marker 1 to ag deposit charge of the original polarity and so on. Thus, as the device traces the path to be measured the marker 1 lays down strips of electric charge of alternate polarity each of a length equal to the spacing between the marker 1 and the probe 2. In response to signals from the probe 2 the measuring means M counts the changes in polarity and thus determines the total distance travelled by the device.

In an alternative form of the preferred arrangemer the marker 1 magnetises the surface S instead of depositing electric charge thereon, and the probe 2 detects the polarity of the magnetisation of the surface.

Where the path to be measured lies on a surface on which the marking agent cannot easily be deposited, a transparent sheet of appropriate material may be laid over the surface.

Referring now to Figure 3, in a modification of tl arrangements described above with reference to Figures 1 aı 2, the marker and probe act on a sphere 4 trapped in a hol( which allows universal rotation of the sphere about its cer In use the sphere contacts the surface S so that the spher( rotates as the path to be measured is traced by the device. The marker 1 deposits marking agent on the surface of the sphere and the probe 2 detects the deposited marking agent thereby to measure the distance travelled by the device as described above. It will be appreciated that the sphere is fabricated so as to have a surface with suitable

0071334

properties for the deposition of the marking agent thereby
enabling the measurement of paths on any surface, whether
or not it has suitable properites for the deposition of the
marking agent.

CLAIMS

1.    A device for measuring the length of a path characterised by:  means (1) for dispensing a marking agent as the device traces out said path;  and means (2, M) for monitoring the dispensed marking agent.

2.    A device according to Claim 1 wherein the quantity of marking agent dispensed bears a predetermined relation to the distance travelled by the device, and said monitoring means monitors the quantity of marking agent dispensed.

3.    A device according to Claim 2 wherein the marking agent is a liquid or electric charge.

4.    A device according to Claim 1 wherein the marking agent is deposited on a surface (S) as it is dispensed and the monitoring means monitors the deposited marking agent.

5.    A device according to Claim 4 wherein as the marking agent is deposited a property of the marking agent is changed in a predetermined manner with the distance travelled by the device, and the monitoring means monitors the change in said property of the deposited marking agent.

6.    A device according to Claim 5 wherein said property of the deposited marking agent changes each time the device has travelled a predetermined distance, and the monitoring means counts the number of said changes.

7.    A device according to Claim 6 wherein the marking agent is deposited at a first location in the device and said property of the deposited marking agent is detected at a second location in the device at said predetermined distance from the first location, and the property of the marking agent deposited at said first location is changed in response to the detection of a change in the property of the deposited marking agent at said second location.

8.    A device according to Claim 7 wherein said second location coaxially surrounds said first location (Fig.2).

9.    A device according to any one of Claims 4 to 6 wherein the marking agent is deposited at a first location in the device and the deposited marking agent is monitored at a second location coaxially surrounding the first location (Fig.2).

0071334

10. A device according to any one of Claims 4 to 9 wherein the marking agent is electric charge or magnetisation.

11. A device according to Claim 10 when dependent on Claim 6 wherein said property is the polarity of the marking agent.

12. A device according to any one of the preceding claims including a sphere having a surface on which the dispensed marking agent is deposited as the device traces the path to be measured, the sphere being mounted for rotation about its centre by contact with the surface on which the path lies as the device traces out the path.

Fig.1.

Fig.2.

Fig.3.

European Patent Office

**EUROPEAN SEARCH REPORT**

Application number

EP 82 30 2968

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 013 494 (BRITISH GAS CORPORATION) *Claims 1-3; figure 1* | 1,4,7, 10 | G 01 B 21/00 G 01 C 22/00 |
| Y | US-A-4 244 652 (J.L.BERGER et al.) *Column 2, lines 14-39; column 3, line 54 - column 4, line 39* | 1,2,4, 5,10, 11 | |
| Y | DE-A-2 532 060 (F.HOCK) *Page 1, paragraph 2 - page 2, paragraph 2; claim 8* | 1-7,10 ,11 | |
| A | US-A-2 760 840 (J.F.GORDON) *Column 4, lines 11-16; column 3, lines 44-50; column 5, line 16 - column 6, line 17* | 1,3,12 | TECHNICAL FIELDS SEARCHED (Int. Cl. 3) |
| A | FR-A-2 371 674 (ETAT FRANCAIS) *Page 3, lines 13-27; page 6, lines 7-10; claim 1* | 1,3 | G 01 B 5/00 G 01 B 7/00 G 01 B 13/00 G 01 B 21/00 G 01 C 7/00 |
| A | DE-A-2 928 899 (NIPPON KOKAN K.K.) *Figure 1* | 1,10 | G 01 C 22/00 G 01 D 15/00 G 01 F 1/00 G 01 P 5/00 |

The present search report has been drawn up for all claims

| Place of search THE HAGUE | Date of completion of the search 21-07-1982 | Examiner PRATSCH H.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## European Patent Office
## EUROPEAN SEARCH REPORT

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. 3) |
| A | IBM TECHNICAL DISCLOSURE BULLETIN, vol. 22, no. 10, March 1980, pages 4393,4394, New York (USA); M.R.ANGLISS: "Magnetic particle flow meter". --- | 1 | |
| A | JOURNAL OF SCIENTIFIC INSTRUMENTS, vol. 44, no. 7, July 1967, pages 558,559, London (GB); P.J.STREET et al.: "A technique for flow visualization using chemical indicator solutions". *Page 558, chapter 2, paragraph 1* ----- | 1 | TECHNICAL FIELDS SEARCHED (Int. Cl. 3) |

The present search report has been drawn up for all claims

| Place of search | Date of completion of the search | Examiner |
|---|---|---|
| THE HAGUE | 21-07-1982 | PRATSCH H.R. |